# EUROPEAN PATENT SPECIFICATION

(11) **EP 3 229 609 B1**
(45) Date of publication and mention of the grant of the patent: **14.06.2023**
(21) Application number: 15823015.1
(22) Date of filing: 01.12.2015
(51) Int. Cl.: A23L 7/139, A23L 7/148, A23L 7/174, A23L 7/196

(54) **A METHOD FOR PRODUCING QUICK-COOKING OR INSTANT PARBOILED CEREALS**
VERFAHREN ZUR HERSTELLUNG VON SCHNELLKOCHENDEM ODER PARBOILED GETREIDE
PROCÉDÉ DE PRODUCTION DE CÉRÉALES ÉTUVÉES INSTANTANÉES OU À CUISSON RAPIDE

(30) Priority: 11.12.2014 IT VR20140305
(43) Date of publication of application: 18.10.2017
(73) Proprietor: Pedon S.p.A., 36064 Colceresa (VI) (IT)
(72) Inventor: VIGNOLA, Francesco, 13100 Vercelli (IT); VIGNOLA, Marcello, 13100 Vercelli (IT)
(74) Representative: Lissandrini, Marco
(86) International application number: PCT/IB2015/059253
(87) International publication number: WO 2016/092418

(56) References cited:
- EP-A2- 0 214 044
- EP-A2- 1 867 240
- WO-A1-00/44243
- FR-A- 1 044 590
- US-A- 2 733 147
- US-A- 3 071 471
- US-A- 5 240 728
- US-A- 5 997 930

## Description

This invention relates to method for producing quick-cooking or instant parboiled cereals which can be adapted to the entire range of grain cereals and which allows cereals to be obtained which are wholegrain, semi-wholegrain and refined.

The term "quick-cooking cereal" or "quick-cooking parboiled cereal" means a parboiled cereal with a natural appearance which cooks in a reduced time (generally 8-10 minutes rather than 15 - 20 minutes in the case of rice). In the case of rice, the aspect of a quick-cooking rice is natural and the grains have a smooth surface.

The term "instant" means a fast-cooking parboiled cereal which cooks in less time compared with that defined as "quick-cooking" (5 minutes or less in the case of rice). In the case of rice, the aspect of an instant rice is not natural as in the case of quick-cooking parboiled rice and the grains do not have a smooth surface.

The caryopses of the cereals differ in terms of the high starch content. The starch is a complex polysaccharide insoluble in water and represents the most important source of carbohydrates available for absorption and which can be used by the human cellular metabolism.

It is found in large quantities in cereals and legumes, in a crystalline form, inside the cytoplasm. The starch consists of amylose (linear polymer of glucose) and amylopectin (branched polymer of glucose).

In order for the starch present in the grains to becomes digestible it is necessary for it to lose its crystalline and ordered structure and change to a disordered structure, with the characteristics of the gel (gelatinisation). The process for gelatinisation of the starch occurs with the heating in a watery environment. With sufficient moisture and temperature, the granules progressively swell and the starch loses its crystalline structure; the amylose and the amylopectin enter into solution, forming links with the molecules of water.

Following the gelatinisation, the chains of amylose and amylopectin become exposed to the action of the digestive enzymes and this process is essential to favour the metabolic use of the starch contained in the foodstuffs.

The cooling favours restoration of the ordered structure with consequent "recrystallizing and retrograding" of the starch.

The gelatinisation and the retrograding of the starch are influenced by various factors:
- Water content and temperature: the minimum moisture content to start the process is approximately 30% and the temperature is between 50 and 85°C depending on the cereal and its characteristics.
- The vegetable origin of the starch: the amides differ above all in terms of the different ratio between amylose and amylopectin; so the time for the starch to retrograde depends on the quantity of amylose which it contains. The amides rich in amylose (maize and wheat) gelatinise at higher temperatures and recrystallize faster. The quantity of retrograded starch is therefore directly proportional to the content of amylose.

The process for formation of the gel (gelatinisation) starting from the granules of starch consists in the swelling by hydration of the amorphous part of the granules, with destabilisation of the crystalline regions dispersed in them, which melt. It therefore changes from an ordered and partly crystalline structure to a disordered structure, with the characteristics of a gel.

The amorphous regions of the starch granules mainly consist of amylose (linear polymer of glucose) and part of the amylopectin chains, whilst the crystalline regions consist of the lateral chains of the amylopectin, ordered in a central-peripheral direction. The overall structure of the grain has an alternating succession of amorphous regions and concentric crystalline regions.

As already mentioned, the gelatinisation process takes place when the percentage of water contained in the grain reaches the threshold value of approximately 30-35% and when the temperature has exceeded the threshold of 50°C - 85°C, usually known as vitreous transition temperature or the gelatinisation temperature.

The gelatinisation of the starch proceeds from the peripheral zone of the grain towards the inside of the grain. The position of the feed front of the gelified zone changes over time and the feed speed depends on the interaction between the starch and water which occurs at the separation interface between the two zones. This factor corresponds to the cooking speed.

There are prior art processes for producing specific quick-cooking or instant parboiled cereals such as rice or hard wheat.

Patent document EP 0 561 092 B1 describes a method for producing a product intended for human consumption making specific reference to the production of grains of pre-cooked and husked hard wheat.

In that document, the product subjected to processing is hard wheat which, after cleaning by suction and use of a device known as a 'destoner' (device used to separate impurities from the grains), is selected using calibrators to obtain the desired size of the grains, that is to say, measurements from 2.0 to 2.8 mm for the small grains and 2.8 to 3.5 mm for the large grains, and then calibrated using cylinders with pockets to separate broken grains.

The steps described are the following:
- Preheating to 30°C - 100°C. The duration of the treatment is approximately 2 minutes and the outfeed temperature is between 30°C and 100°C.
- Hydrating preferably with 54 litres of water for every 100 kg of grain to reach a final moisture content of 38-45%. The treatment is performed continuously in a screw conveyor for a time of preferably 30-45 minutes and at a water temperature of between 50°C and 90°C.

- Rest, keeping the grains at a temperature of between 50°C and 90°C for 1 to 2 hours in order to favour penetration of water into the heart of the grain.
- Cooking of grains. The granules are conveyed through a MW stove per a cooking period of approximately 2 minutes. The infeed temperature of the grains reaches 50°C - 90°C and the outfeed temperature reaches 90°C - 105°C.
- Drying the grains in a rotary drum which has three coaxial cylinders, with air infeed at 120°C - 150°C and outfeed of 60°C - 80°C, for a time of 30-75 minutes.
- Cooling at ambient temperature.
- Refining of the grains in cylindrical vertical refining machines with seven grinding wheels. The degree of refining (removal) is equal to 15-25% of the grain. The refining operation reduces the preparation time from 60 minutes (required for the non-pearled grain) to 30 minutes.
- Expansion of grains. The grains are placed on a vibrating table and passed between a pair of infrared panels where, in 14-30 seconds, they reach the temperature of 170°C - 210°C. The grains are expanded to 1.3 - 2.0 times the initial volume. The effect is to allow a reduction in the a cooking time to 10-20 minutes depending on the size of the grains.
- Final re-humidification which brings the moisture content of the product to approximately 12-13%.

The process described in EP 0 561 092 B1 is extremely rigid and not very flexible. For example, it is essential to calibrate the grains which will then give a product with a cooking time reduced to 10 or 20 minutes, depending on the size of the grains (14 minutes for the small grains and 20 minutes for large grains).

Moreover, the process described in patent document EP 0 561 092 B1 is suitable for obtaining a single product: refined quick-cooking hard wheat.

In addition to the above, in order to reduce the cooking time it is necessary to push the removal of the surface flour until removing 15-25% of the grain. In this way one reaches the starchy layers and almost the elements such as iron, phosphorus, vitamins etc. are removed from the grain. Patent documents EP 1867240, EP 0923313 and US 6,416,802, belonging to the same family of patent documents, describe a process for producing a quick-cooking rice with a natural appearance, smooth surface, natural flavour etc., without substantially altering the size and/or shape of the individual grains.

Very briefly, this process contemplates starting from wholegrain parboiled rice with a uniform moisture content of between 19% and 30% by weight, refining it by forming transversal microfissures during the refining without plastically deforming the grain, drying the parboiled rice.

The process described in these patent documents is extremely rigid as it is only applicable to some and extremely limited varieties of rice and to obtain only refined rice (also defined as white or processed) with a cooking time of 10 min, since the generation of the microfissures is obtained during the refining.

Therefore, in general, the prior art processes only relate to processed rice and processed wheat. In effect, the known processes are functional with respect to the type of cereal processed and are therefore not designed to be applied to types of cereals other than rice or hard wheat.

From the point of view of the users, the need of having further quick-cooking or instant cereals remains unsatisfied, whilst from the point of view of the production, a method is not available which can be adapted to the production of any quick-cooking or instant parboiled cereal in order to make it economically advantageous.

As regards in particular the instant cereals, the prior art processes do not allow the differentiation of the products according to their use.

In this context, the technical purpose which forms the basis of this invention is to propose a method for producing quick-cooking or instant parboiled cereals which overcomes the drawbacks of the prior art and satisfy the still unresolved needs.

More specifically, the aim of this invention is to provide a method for producing quick-cooking or instant parboiled cereals which can be adapted to the production of any cereal in grain form.

A further aim of this invention is to provide a method for producing quick-cooking or instant parboiled cereals which allows any cereal to be obtained, be it wholegrain (also called semi-rough or brown), semi-wholegrain (also called semi-processed or semi-milled) or refined (also called white or processed or pearled).

More specifically, one of the aims of this invention is to provide a method for producing quick-cooking or instant parboiled cereals which is versatile and adaptable also in terms of type of product obtained, for example being able to vary the cooking times of a same type of cereal. The term "cooking time" means an objective property of the cereal measured on the basis of the quantity of water which can be absorbed in a predetermined period of time.

The technical purpose indicated and the aims specified are substantially achieved by a method for producing quick-cooking or instant parboiled cereals, comprising the technical features described in one or more of the appended claims. The dependent claims correspond to possible and further embodiments of the invention.

The method according to this invention allows all the cereals to be precooked and to obtain quick-cooking wholegrain (semi-rough), semi-wholegrain (semi-processed) or refined (white or processed or pearled) cereals.

More specifically, in the conventional methods for pearling or refining, on average 12-14% of bran or flour is removed in the case of semi-wholegrain cereal or 15-25% in the case of refined cereal, as indicated in patent document EP 0 561 092 B1. In the process according to this invention, thanks to the parboiling it is possible to incorporate approximately 5-7% of the content of the outer flour and the sequence of steps proposed makes it possible to make the fissuring of the grain independent of the refining. In this way, in the process according to this invention it is possible to limit the degree of removal of the flour during the refining and therefore carry out a less violent refining compared with the prior art documents: the refining to semi-wholegrain removes a maximum of 2-3% of flour (or the successive refining to refined removes a maximum of 7% of flour). Since the majority of the precious elements which characterise cereals are contained in the surface layers, a very large part can be conserved with the process according to this invention.

In addition to the above, with reference for example to instant rice, the process according to this invention allows different types to be obtained according to the use: a rice with a cooking time of 5 minute for consumption or for industry, a rice with a cooking time of 4 minutes for preparation in a frying pan or wok with the addition of *soffritto* and a measured quantity of water, instant rice with medium sized grains for risotto and paella, special preparations for specific markets (Spanish and oriental markets), special preparations for industry, for example an instant rice which is hydrated with a measured quantity of water in a refrigerator at 4°C for the preparation of frozen, pasteurised and/or sterilised products, avoiding any form of bacterial contamination etc., instant rice which is edible merely with the addition of cold water for military rations in war zones and at the same time with hot water when possible.

Moreover, the process according to this invention allows cereals in grain form to be obtained with a uniform cooking time (for example, 10 minutes or instant) making it possible to mix them, thereby balancing values and contents and enhancing them.

Some characteristics of the cereals are described below.

Some cereals, in particular rice, spelt and oats, have the caryopses covered by outer layers of so-called "husk". Before refining, the husk must be removed by the "husking" operation. Preferably, the grains are made to pass between two rubber covered rollers, with different diameters and rotating in opposite directions so that it is easy to delicately detach the husk, which is then separated, for example, by an air separator.

The outer casing of the grains is rich in fibre, B and E vitamins, minerals and protein. This outer layer is removed with the refining or pearling and the products obtained are called "husk" or "hull" in rice and generically "bran" in the others cereals, in particular in wheat. This outer part contains the most precious elements: the endosperm, or *mandorla amilifera,* contains the carbohydrates, proteins and soluble fibres. The germ is also rich in "good" fats, B and E vitamins, minerals and protein. The parboiling process allows a large part of these premium substances to be transferred inside the grain, so the parboiled grains are generally richer than the natural refined ones.

Following the husking operation, in particular in the case of rice, spelt and oats, a semi-rough (or wholegrain) cereal is obtained. At the end of the complete refining or pearling operation, a refined or processed cereal is obtained (also called "white" in the case of rice). If a partial refining/pearling is carried out, removing only a portion of the husk or bran, the semi-processed or semi-wholegrain cereal is obtained.

Amaranth has properties similar to that of quinoa. The nutritional composition of amaranth shows a significant biological value of its proteins, in particular due to the considerable quantity of lysine amino acid. The extremely high absorption and metabolising capacity of its polypeptides determines a large functional-structural effectiveness of the amino acids contained. Thanks to the high quantity of microelements such as calcium, iron and phosphorous, 100 g of amaranth covers 63% of the requirement of iron for pregnant women and 33% of the requirement of iron for menopausal women.

Oats are rich in protein (12%), fats (7%), fibre (12-14%) and carbohydrates (approx. 64%). It has a good content of mineral salts, especially calcium, magnesium, potassium, silicon and iron, and these elements make it an excellent mineraliser. If eaten in the form of toasted grains, and this also applies fro pre-cooked grains, it is an excellent source of protein and vitamin B1 and it also has a good percentage of lysine. It is rich in linoleic acid and soluble fibres.

In accordance with the Food and Drug Administration (US), oats favour the lowering of the cholesterol level. For this reason, if it is presented as a pre-cooked cereal, easy to prepare in a short time, with a natural appearance and a pleasant flavour, it may be one of the most interesting and functional products in the range of pre-cooked cereals.

Since it also has a high content of lysine, when mixed with wheat, in which it is lacking, it substantially improves the protein synthesis of the two cereals.

Moreover, it does not contain gluten and is recommended for individuals suffering from celiac disease.

The caryopsides in wheat has an outer bran which is rich in fibre, group B vitamins, minerals and proteins. In the prior art processes a large part of these component is lost during the milling process, in the same way as the germ, rich in proteins and lipids, is eliminated. The proteins have a high biological value as they are rich in prolamin, leucine and glutamine, but thy are lacking in lysine and methionine, essential amino acids. This shows the importance of obtaining semi-rough and/or semi-processed quick-cooking wheat and, if totally processed, mixing it with other cereals rich in lysine and methionine (such as oats, amaranth, buckwheat and spelt) so that the complementary composition gives a well balanced product with a high nutritional value.

Buckwheat has a high concentration of all the essential amino acids, especially lysine, threonine and tryptophan. Moreover, it has a very high content of protein (approx. 18%) and this protein can be assimilated up to 90%. A regular consumption of buckwheat may help the to improve operation of the kidneys, lowering arterial pressures which are too high. Spelt (*triticum spelta* - *triticum dicoccum* - *triticum monococcum*) is lacking in fats, but rich in fibre, vitamins, mineral salts and iron. This is one of the least calorific cereals; 100g has approx. 340 kcal; its gluten is different from that of the grain and more digestible. It contains the essential amino acid methionine, which is lacking in almost all the other cereals.

Kamut ^{®} is rich in selenium, magnesium, zinc, vitamins, lipids and fatty acids. It is also rich in essential amino acids, in particular threonine, cysteine, arginine, histidine and aspartic acid. The grain kamut is high in energy and calories, so it is recommended for growing children, the elderly and anyone carrying out sporting activities. Kamut is rich in selenium, magnesium, zinc, vitamin E, lipids and fatty acids. The amino acids which are found in greatest quantities are: threonine, cysteine, arginine, histidine, aspartic acid and serine. In view of the considerable energy which it can give to the body, kamut may be considered to be a cereal with a high energy value. It has a reduced content of gluten so it can be easily digested by individuals who suffer from a slight intolerance, although it is not suitable by individuals suffering from celiac disease.

Maize is rich in carbohydrates but low in two essential amino acids (Lysine and Tryptophan). It has a content of amylose equal to 30% and amylopectin equal to 70%.

Millet is tasty and very digestible. It has a high dietetic content, quite a high protein content (11 %), mineral salts, rough fibre; is rich in group A and B vitamins especially niacin, B6 and folic acid, calcium, iron, potassium, magnesium and zinc. Due to its high content of salicylic acid it is considered a true and proper beauty product as it stimulates the growth of hair and nails and reinforces tooth enamel.

Barley has a nutritional composition similar to that of maize: protein approx. 10%, lipids 1.4%, carbohydrates approx. 70% and 9% of fibre. It has a high content of mineral salts: phosphorus 189 mg/100g, potassium 120mg/100g, magnesium 79mg/100g, silicon and zinc, so it has mineralising properties. It has quite a high quantity of vitamins, in particular vitamin E (tocopherols and tocotrienols) B (B1, B2 and B3). The surface of the grain is free of skin.

Sorghum is an important food raw material as it lies in fourth place in the world agricultural economy after rice, maize and wheat. The grain has approximately 70% of starch, 10% of edible protein, 3% of fats and is rich in group B vitamins as well as antioxidants.

Rice is the most cultivated cereal for human consumption in the world; it is grown in almost every country and it is the staple food for half the world's population. It is the most complete foodstuff: 100g provides approx. 330 kcal, with a considerable contribution of fibres and vitamins, as well as various mineral salts and it is digested more easily than other cereals. It contains essential fatty acids: 29-42% of linoleic acid and 0.8-1% of linoleic acid. The proteins, approx. 7%, are tied in the integument of the rice and are lost during the refining process. This shows the importance of the pre-cooking process for obtaining wholegrain and semi-wholegrain rice, which is easy and quick to prepare. The precooked product has a content of group B vitamins and iron up to 4 times higher that of refined rice,
Rye contains approx. 16% of proteins, 2.5% of lipids, 68% of glucides and it also has a good content of ireon, calcium, phosphorous, thiamine, riboflavin and niacin. It promotes circulation and makes the blood vessels elastic.

Quinoa has small seeds or fruit similar to that of millet. After harvesting it is washed and dried. It is particular rich in proteins, which contain all the essential amino acids in balanced proprtions. It also has a good composition of mineral salts and vitamins.

Further features and advantages of this invention are more apparent in the description which follows of some examples of processes for producing quick-cooking or instant parboiled cereals, with reference to the accompanying drawings in which:
- Figure 1 is a flow diagram of a process according to this invention designed for the production of processed or semi-processed quick-cooking rice, spelt or oats;
- Figure 2 is a flow diagram of a method according to this invention suitable for the production of quick-cooking semi-wholegrain rice, spelt and oats;
- Figure 3 is a flow diagram of a process according to this invention designed for the production of processed or semi-processed quick-cooking barley;
- Figure 4 is a flow diagram of a method according to this invention suitable for the production of quick-cooking semi-wholegrain barley;
- Figure 5 is a flow diagram of a method according to this invention suitable for the production of any quick-cooking processed or semi-processed cereal, except for barley, amaranth, teff, millet and quinoa;
- Figure 6 is a flow diagram of a method according to this invention suitable for the production of any quick-cooking semi-rough cereal, except for barley, amaranth, teff, millet and quinoa;
- Figure 7 is a flow diagram of a method according to this invention suitable for the production of quick-cooking, amaranth, teff, millet and quinoa;
- Figure 8 is a flow diagram of a method according to this invention suitable for the production of instant processed or semi-processed rice, spelt or oats;
- Figure 9 is a flow diagram of a method according to this invention suitable for the production of instant semi-wholegrain rise, spelt or oats;
- Figure 10 is a flow diagram of a method according to this invention suitable for the production of instant processed or semi-processed barley;
- Figure 11 is a flow diagram of a method according to this invention suitable for the production of instant semi-wholegrain barley;
- Figure 12 is a flow diagram of a method according to this invention suitable for the production of any instant processed or semi-processed cereal, except for barley, amaranth, teff, millet and quinoa;
- Figure 13 is a flow diagram of a method according to this invention suitable for the production of any instant semi-rough cereal, except for barley, amaranth, teff, millet and quinoa;
- Figure 14 is a flow diagram of a method according to this invention suitable for the production of instant amaranth, teff, millet and quinoa. With reference to this invention, the term "cereals" defines a family comprising all the herbaceous that produce fruits which, when milled, provide flour to make bread and other food.

Some cereals belong to the monocotyledon plants of the Gramineae or Poaceae family and they are subdivided between Gramineae sub Panicoideae (maize and sorghum), Gramineae sub Poaceae (hard wheat and soft wheat, spelt, oats, rice, barley, rye and kamut) and Gramineae sub Chloridoideae (teff).

Other cereals belong to the dicotyledon plants of the Gramineae family and they are subdivided between Polygonaceae (buckwheat), Amaranteae (amaranth) and Chenopodiaceae (quinoa).

More specifically, the raw material of the process according to this invention can be grains of: rice, spelt or oats which is unhusked (that is, still associated with the husk). For rice it is possible to use all the varieties provided they have a certain amylose content. The raw material may also be semi-wholegrain rice or semi-wholegrain cereals such as spelt and oats; in this case the husking step is not planned.

For other cereals, for example wheat or rye, the husking operation is not necessary and the raw material of this process is the semi-rough cereal, not pearled or refined.

In the case of amaranth, teff, millet and quinoa, the raw material is the cereal as it is and, given the small size of the grains and the extremely thin skin, no refining is carried out.

The general aspects of the process steps according to this invention are described below.

According to one possible embodiment, it is possible to proceed to a preliminary cleaning and selecting step wherein foreign bodies are discarded from the raw material and immature or empty grains are selected.

After the cleaning and selecting step, if present, the process according to this invention comprises a step for soaking or hydrating the grains wherein the grains are immersed in water with a temperature below the gelatinisation temperature (Tg) of the cereal being processed. Therefore, although in the presence of moisture, the process for gelatinisation of the starch contained in the cereal is not triggered. For example, the water temperature is on average less than the gelatinisation temperature by approximately 2-3°C.

According to one possible embodiment, the step for soaking or hydrating the grains may be carried out in vertical silos. Preferably, the hot the water is subjected to recirculation and the quantity of water is sufficient only to cover the grains so as to avoid dispersion or an excessive consumption.

According to an alternative embodiment, designed in particular for sticky cereals such as barley or very delicate cereals such as teff, quinoa and amaranth, the soaking may take place in movement, for example inside a screw conveyor with a heated jacket and injection of water and steam. The rotation of the screw prevents the grains from sticking together and allows the delicate transport towards the successive steps.

In one embodiment, the soaking step ends with a rest step after draining excess water. The rest step lasts approximately 60 min and is aimed at facilitating the penetration of the water into the heart of the grain and ensure a uniform moisture content. The rest step may be static (for example in vertical silos) or in movement (for example in screw conveyors) in the case of sticky or very delicate cereals.

At the end of the soaking and rest step the moisture content (MC) is between 27% and 32%. The moisture content is measured in accordance with the Codex Alimentarius protocols and the process comprises a treatment in an oven at 105°C of a 100 g sample, measuring the weight before and after the heating. The percentage difference between weight of the sample before the evaporation and after evaporation represents the moisture content of the sample.

The temperature parameters and the moisture content percentage to be reached at the end of the hydrating and rest step are identical whether vertical silos or screw conveyors are used.

After the step of soaking or hydrating the grains, the process according to this invention comprises a step of cooking or parboiling. The parboiling step is carried out in an autoclave. More specifically, saturated steam is used introduced at a pressure of between 10 kPa (0.1 bar) and 150 kPa (1.5 bar), preferably 10 kPa (0.1 bar) and 80kPa (0.8 bar). The presence of saturated steam allows the hydration to be continued even during the cooking, optimising the gelatinisation of the starch contained in the grain. To allow a controlled and uniform gelatinisation it is possible to move the grains using movement systems such as, for example, belts, screw conveyors, rotary reels or other similar systems. The temperature, during the parboiling process, and the degree of gelatinisation are controlled to obtain a gelatinisation of 85% - 100%.

After the cooking or parboiling step, the process according to this invention comprises a microwave heating step (MW). Preferably, the temperature inside the grain is increased to 95°C - 130°C for a period of 1-2 minutes. By regulating the power of the emitters (Magnetron) it is possible to reach a 100% degree of gelatinisation of all the grains. The term "microwave heating" means a heating with alternating magnetic field. Amongst the electromagnetic waves allowed in the industrial sector (ISM) the frequency of 245 GHz is used in particular.

Thanks to the MW heating, it is possible to limit the hold time and the temperature in the autoclave during the cooking step, such as to induce lower stresses in the grains and minimise the change of colour. Moreover, it is possible to make the temperature uniform at the heart of the grains even having different sizes, and therefore gelatinise also the heart and make it uniform with the degree of gelatinisation obtained in the autoclave. Lastly, the MW heating immediately after the cooking in an autoclave highlights the presence in the product of white globules of starch not cooked and avoids this by regulating the power of the emitters.

After the cooking or parboiling step, and the microwave heating step, the process according to this invention comprises a drying and tempering step. The product is dried to an average moisture content value of 16% - 18%. More specifically, the moisture content of the outer and surface part of the grain is between 8% and 10% and is less than the moisture content inside the grain. When moisture is removed from the grain the starch contained in the grain starts to retrograde in the outer and surface part of the grain.

The drying and tempering step occurs in a rotary dryer with compartments, with separate sections in which different temperature and moisture content conditions can be created. The compartments are made, for example, of wire mesh in such a way that a flow of air generated by fans passes easily through the product.

More specifically, there are present at least two (preferably four) sections supplied with air at decreasing temperatures in the direction of travel of the grains inside the dryer. For example, temperatures of up to 95°C can be used in the first section with consequent high degrees of moisture extraction. Temperatures of up to 85°C may be used in the second section with continuous drying to obtain a temperature at the heart of the grain of between 70°C and 80°C. In the two successive sections (third and fourth) the temperature is progressively reduced: in the third section the temperature is 75°C and in the fourth section it is 65°C. In the case of two different sections, temperatures of up to 95°C can be used in the first with temperatures of up to 65°C in the second (and last).

The last rows of compartments, for example at the last section, are isolated from the remaining ones in such a way as to not receive air in order to favour a predetermined tempering. During the tempering step there is a transmigration of the moisture content towards the outside of the grain and a situation of greater equilibrium of the moisture content itself.

After the drying and tempering step, the process according to this invention can comprise a cooling step. The grains are cooled until reaching an ambient temperature (Ta), for example between 25°C and 30°C. Preferably, the cooling step is performed in an air cooler cooled with freezing water. The passage of the grains inside the cooler is fast for a maximum time of 2 or 3 minutes obtaining a greater cooling on the surface of the grain than on the inside of the grain.

After the drying step and the cooling step, if present, the process according to this invention can comprise a refining step. More specifically, the cooling is preferably always present in the case of refining. The refining step may be preceded by a husking step if the raw material is an unhusked cereal (for example rough rice or spelt, not already subjected to husking).

The refining step, which follows the husking step, if present, may preferably occur with a sequence of passes (for example five passes) in vertical abrasive machines equipped with air extraction. The number of passes depends on the type of end product: semi-wholegrain (at most two passes) or refined (up to five passes). The grain size of the grinding wheels during the sequence of passes decreases and it is possible to perform adjustments in order to adapt to any type of cereal.

The methods by which the preceding steps have been performed avoid, if the refining step is carried out, breakages and loss of yield since the grain is still flexible. In other words, the sequence of steps of hydrating, cooking, MW heating, drying and if necessary cooling carried out as described above makes it possible to obtain a grain which is still flexible which, if refined, is not subjected to breaks or fissures during the refining step.

The refining step is not performed if wholegrain cereals are to be obtained. The refining step is not performed if semi-wholegrain cereals are to be obtained. Moreover, the refining is not carried out in the case of amaranth, quinoa, teff or millet.

After the drying and tempering step, and, if necessary, the cooling step and/or the total or partial refining step if present, the process according to this invention comprises an optional re-humidifying and heating step. The re-humidifying and heating step is preferably always performed if there has previously been a cooling step and therefore total or partial refining. During the re-humidifying and heating step the grains are heated by injecting steam until reaching a moisture content (MC) of 20 - 22% and a temperature of 60°C - 65°C. Preferably, the re-humidifying and heating step is performed in a rotary apparatus with continuous mixing of the grains. During this step, any retrograded starch returns to the gel phase, and is therefore very elastic.

After the drying and tempering step, and, if necessary, the cooling step and/or the total or partial refining step and/or the re-humidifying and heating step if present, the process according to this invention comprises a rolling step which is regulated in such a way as to obtain transversal cracking of the outer and surface part of the grain.

During the rolling step the grains are compressed uniformly using smooth rollers rotating at equal speeds and in opposite directions. For example, the grains are passed though a mill with smooth cylinders, counter-rotating at the same speed, and preferably not heated, still more preferably cooled. The shape of the grains remains natural and surface micro-fissures are obtained by controlled squashing.

The micro-fissures caused by the squashing of the grains during the rolling step depend on the sequence of the previous steps, in particular the sequence of hydrating, cooking, MW heating, drying and tempering if necessary cooling and re-humidifying with heating which determine different temperature and flexibility characteristics between the inside and the outside of the grain. More specifically, before the rolling step, the grain has undergone a heating and if necessary differentiated cooling between the outside and inside with the start of retrograding of the starch only in the surface part whilst the heart is still sufficiently hot and conserves the flexibility and softness typical of the gel state. This avoids the deformation of the grain or its thinning and the squashing is controlled. The depth and the thickness of the cracking are adjusted according to the end product to be obtained, that is to say, according to the specific water absorption, cooking time etc.

After the rolling step, the process according to this invention may comprise a final drying step designed to bringing the grains to an equilibrium moisture content (MC) to obtain a quick-cooking product. The equilibrium moisture content means the moisture content at which the product is conserved naturally, that is, from 12.5% to the maximum of 14.5%.

The sequence of steps described above, in particular the steps for hydrating, cooking, MW heating, drying and tempering and rolling (if necessary cooling and re-humidifying with heating) affects the type of end product (quick-cooking in 5, 8, 10 minutes). Thanks to the process according to the present invention it is indeed possible to control the factors which influence the quick-cooking time of the final quick-cooking product. These factors are due to: the degree of gelatinisation, the type of drying with different degrees of temperature and extraction of the moisture content for example in the rotary dryer equipped with separate sections, rolling intensity (with gap between the rollers of between 0.02 mm and 0.8 mm). More specifically, thanks to the elasticity reached, the grain after the rolling returns immediately to the original size but, due to the squashing, micro-fissures are created in the grain.

Alternatively, the final drying step is preceded by an expansion step (if necessary preceded by a further drying) to obtain the so-called "instant" products. More specifically, after the rolling one can proceed directly to the expansion. The step for expansion of the grains can be preceded and/or followed by a drying step.

For example, the expansion step may be performed in a drying apparatus subject to the passage of a high volume of air having a high temperature, of approximately 180°C - 260°C.

The sequence of steps described above, in particular the steps for hydrating, cooking, MW heating, drying and tempering, rolling, drying, expansion and final drying (if necessary cooling and re-humidifying with heating) affects the type of end product (instant 2, 4 minutes). Thanks to the process according to the present invention it is indeed possible to control the factors which influence the re-hydrating time of the final "instant" product. These factors are due to: the degree of gelatinisation, the type of drying with different degrees of temperature and extraction of the moisture content for example in the rotary dryer equipped with separate sections, rolling intensity (with gap between the rollers of between 0.02 mm and 0.8 mm), expansion temperature and permanence time.

The end product, both in the case of a quick-cooking product and in the case of an "instant" product may be in the form of a semi-wholegrain, semi-processed or totally refined cereal, predetermining the cooking time and the density.

Some specific examples of the process according to this invention are described below.

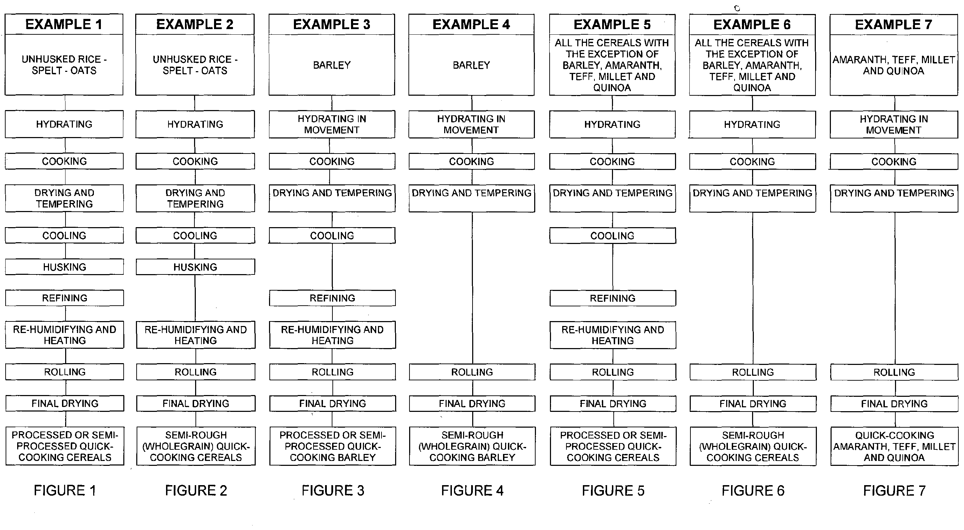

### Example 1 (Figure 1)

Figure 1 illustrates a process according to this invention in particular designed for processing a raw material comprising un-husked grains of rice, spelt or oats.

The process illustrated in Figure 1 is designed to obtain processed or semi-processed quick-cooking cereals. The methods of the above-mentioned steps may be those of the corresponding steps described above with reference to the general aspects of the process.

According to one possible embodiment, it is possible to proceed to the preliminary cleaning and selecting step, not illustrated, wherein foreign bodies are discarded from the raw material and immature or empty grains are selected.

After the cleaning and selecting phase, if present, the process illustrated in Figure 1 comprises the step of soaking or hydrating the grains. More specifically, since they are non-sticky cereals, the step of soaking or hydrating the grains may be carried out in vertical silos in which the water hot is preferably subjected to recirculation and quantity of water is preferably sufficient only to cover the grains.

The soaking step ends with the rest step, not explicitly illustrated in Figure 1, after draining excess water. The rest step is preferably static.

At the end of the soaking and rest step the moisture content reached by the rice/spelt/oats is between 27% and 32%.

After the step for soaking or hydrating the grains, the process illustrated in Figure 1 comprises the cooking or parboiling step. After the cooking or parboiling step there is the MW heating step.

After the cooking or parboiling step, and the MW heating step, the process illustrated in Figure 1 comprises the drying and tempering step in such a way that the grain of rice/spelt/oats reaches an average moisture content equal to approximately 18%.

After the drying and tempering step, the process illustrated in Figure 1 comprises the cooling step.

After the cooling step, the process illustrated in Figure 1 comprises the husking step and the refining step.

The greater or lesser intensity of the refining step means a completely refined or semi-processed final result.

In the case illustrated in Figure 1, the sequence of steps of hydrating, cooking, MW heating, drying and cooling carried out as described above makes it possible to obtain a grain which is still flexible which is not subjected to breaks or fissures during the refining.

After the refining step, the process illustrated in Figure 1 comprises the re-humidifying and heating step. During this step the starch retrograded during the drying and cooling step returns to the gel phase, and is therefore very elastic.

After the re-humidifying and heating step, the process illustrated in Figure 1 comprises the rolling step. The micro-fissures caused by the squashing of the grains during the rolling step depend on the sequence of hydrating, cooking, MW heating, drying and tempering which determine different temperature and flexibility characteristics between the inside and the outside of the grain. In this case, even the steps for cooling and re-humidifying with heating may influence the formation of micro-fissures. After the rolling step, the process illustrated in Figure 1 comprises the final drying step designed to bringing the grains to an equilibrium moisture content (MC) to obtain a quick-cooking product.

The sequence of steps described above affects the type of end product in terms of cooking time (5, 8, 10 minutes) and density.

### Example 2 (Figure 2)

Alternatively to the method illustrated in Figure 1, it is possible to process the same types of cereals described in example 1, in particular grains of rice or spelt or pats which are not husked, to obtain semi-rough (or wholegrain) quick-cooking cereals.

The method is illustrated in Figure 2 and is similar to that illustrated in 1 with the difference that the refining step is not performed, consequently the cooling step and the re-humidifying and heating step are not performed. Between the drying and tempering step and the rolling step only the husking step is performed.

### Example 3 (Figure 3)

Figure 3 illustrates a process according to this invention in particular designed for processing barley to obtain processed or semi-processed quick-cooking barley.

The process is similar to that of Example 1 with the following differences. Since it is a sticky cereal, the soaking step takes place in movement, for example inside a screw conveyor with a heated jacket and injection of water and steam. The rest step is also performed in movement (for example in the screw conveyor).

The husking step is not carried out.

The end product is processed or semi-processed quick-cooking barley as a function of the intensity the refining step.

### Example 4 (Figure 4)

Figure 4 illustrates a process according to this invention in particular designed for processing barley to obtain semi-rough quick-cooking barley. The method is similar to that of example 3 with the difference that the refining step is not performed, consequently the cooling step and the re-humidifying and heating step are not performed.

### Example, 5 (Figure 5)

Figure 5 illustrates a process according to this invention in particular designed for processing a raw material comprising grains of cereal with the exclusion of cereals such as teff, amaranth, millet, quinoa, barley. More specifically, it relates to husked cereals with a grain size greater than 2 mm. The aim is to obtain quick-cooking processed or semi-processed cereals.

The process of Figure 5 comprises the same steps as the process of Figure 1 (example 1) with the exclusion of the husking step.

The end product is processed or semi-processed quick-cooking cereal as a function of the intensity the refining step.

### Example 6 (Figures 6)

Alternatively to the method illustrated in Figure 5, it is possible to process the same types of cereals described in example 5 to obtain wholegrain or semi-rough quick-cooking cereals.

The method is similar to that of example 5 with the difference that the refining step is not performed, consequently the cooling step and the re-humidifying and heating step are not performed.

### Example 7 (Figure 7)

Figure 7 illustrates a process according to this invention in particular designed for processing a raw material comprising a cereal selected from teff or amaranth or quinoa or millet.

The process of Figure 7 comprises the same steps as the process of Figure 4 (example 4).

### Examples 9-14

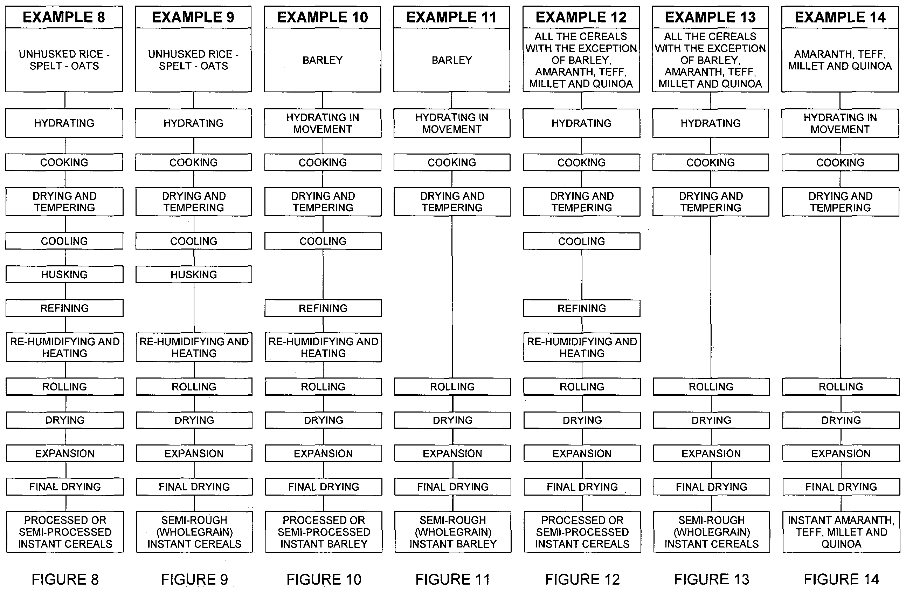

Figures 9-14 illustrate processes for obtaining instant cereals similar, respectively, to those illustrated in Figures 1-7, that is, wherein the raw material is respectively identical and the process steps are respectively identical up to the rolling step.

Following the rolling step there is an expansion step which may be preceded and/or followed by a drying step.

This invention achieves the following advantages.

The process allows a very flexible plant to be adopted in which it is possible to process all the cereals. There is therefore a considerable advantage in terms of cost and flexibility.

The process also allows all the pre-cooked quick-cooking and instant cereals to be obtained in the three types: semi-rough, semi-finished and refined, and in any predetermined cooking time and density.

Thanks to the process according to this invention, it is possible to conserve a greater quantity of precious elements: the cereal in the semi-rough state keeps intact all the elements; both the semi-processed and refined cereal conserve a very high percentage, because in the semi-processed cereal only 3% of flour is removed and the refined cereal is also much richer because only 7% flour is removed compared with 12-14% in the natural, un-processed and refined cereals. In effect, it is possible to adopt a non-aggressive refining, leaving the fissuring of the grain to the rolling step.

The process also allows quick-cooking parboiled cereals with a natural appearance and flavour and quick-cooking pre-cooked cereals (instant) with a natural flavour to be provided, which are suitable for a wide range of different preparations.

Lastly, thanks to the process according to this invention it is possible avoid the use of chemical substances or enzymes.

More specifically, it has been surprisingly noted that the sequence of steps in particular hydrating, cooking, MW heating, drying affect the propensity to fissuring of the grains in the rolling step. More specifically, by controlling the cooking pressures in the autoclave, the successive heating of the heart of the grain by MW heating, the increase or decrease of the drying temperatures, the differences between the moisture content at the surface and at the heart and the cooling speed, it is possible to associate the formation of the micro-fissures just to the rolling, so as to make husking/refining not essential, and control the extent and the number so as to obtain products differentiated in particular on the basis of the cooking time and the density.

More specifically, thanks to the drying divided into two/four steps (two/four independent zones of the dryer) it is possible to control independently the temperature and the moisture extraction, for example, by probes. In this way, during the drying, in particular during the first two drying steps, it is possible to conveniently complete the gelatinisation at the heart using gelatinisation parameters in the autoclave which are more delicate, with lower temperatures and reduced hold time. The drying is continued in the third drying step (zone) and the ventilation is increased in the fourth step to extract more moisture from the outer part of the grain, obtaining a moisture content on the surface of approximately 8-10 % whilst the average moisture content of the grain will be 16-18%. The dry outer surface facilitates the refining process and whilst the heart of the grain remains soft, flexible and far from retrograding.

## Claims

1. A method for producing quick-cooking or instant parboiled cereals comprising:
- a step of soaking or hydrating grains wherein the grains are immersed in water at a temperature less than the gelatinisation temperature (Tg) of the cereal being processed, the soaking step being regulated in such a way that the moisture content reached by the grains is between 27% and 32%,
- a step of cooking hydrated grains performed by subjecting the grains to a temperature greater than the gelatinisation temperature (Tg) of the cereal being processed, in a moist environment, wherein the cooking step is performed in an autoclave using saturated steam introduced at a pressure of between 10 kPa (0.1 bar) and 150 kPa (1.5 bar), preferably 10 kPa (0.1 bar) and 80kPa (0.8 bar),
- a microwave heating step performed immediately after the cooking step,
- a step of controlled drying and tempering in such a way as to bring the grains to an average value of humidity equal to 16% - 18% with a moisture content differentiated between the outer and surface part of the grain and the core of the grain, the moisture content of the outer and surface part of the grain being between 8% and 10%, wherein the drying and tempering step comprises a sequence of at least two, preferably four intermediate steps each operating at a predetermined drying temperature greater than the drying temperature of the intermediate step which immediately follows and wherein the drying and tempering step takes place in a rotary dryer with compartments, preferably supplied with air, with separate sections defining, respectively, the intermediate steps,
- a step of rolling the grains wherein the grains are uniformly compressed, the rolling step being regulated in such a way as to obtain transversal cracking of the outer and surface part of the grain and wherein during the rolling step the grains are compressed uniformly using smooth rollers rotating at equal speeds and in opposite directions.

2. The method for producing quick-cooking or instant parboiled cereals according to claim 1, wherein:
a first drying step operates at a first drying temperature of 95°C and a last drying step operates at a fourth drying temperature of 65°C, and wherein preferably a second drying step operates at a second drying temperature of 85°C and a third drying step operates at a third drying temperature of 75°C.

3. The method for producing quick-cooking or instant parboiled cereals according to claim 1, wherein the last rows of compartments of the rotary dryer are isolated from the remaining ones in such a way that they do not receive air so as to favour a predetermined tempering.

4. The method for producing quick-cooking or instant parboiled cereals according to any one of the preceding claims, wherein in the hydrating step the grains are immersed in water at a temperature less than the gelatinisation temperature of the cereal being processed by 2-3°C.

5. The method for producing quick-cooking or instant parboiled cereals according to any one of the preceding claims, wherein the hydrating step is performed in vertical silos, preferably with water recirculation.

6. The method for producing quick-cooking or instant parboiled cereals according to any one of claims 1 to 4, wherein the hydrating step is performed in a screw conveyor with heated jacket subjecting the grains to continuous movement by means of a rotary screw, with injection of water and steam.

7. The method for producing quick-cooking or instant parboiled cereals according to any one of the preceding claims, wherein the soaking step ends with a rest step, after draining excess water, preferably for 60 min.

8. The method for producing quick-cooking or instant parboiled cereals according to any one of the preceding claims, comprising after the drying and tempering step a cooling step wherein the grains are cooled until reaching an ambient temperature (Ta), for example between 25°C and 30°C.

9. The method for producing quick-cooking or instant parboiled cereals according to claim 8, wherein the cooling step is performed in an air cooler cooled with freezing water for a maximum time of 2 or 3 minutes differentiating the degree of cooling of the outer and surface part of the grain relative to the core.

10. The method for producing quick-cooking or instant parboiled cereals according to any one of the preceding claims, comprising after the drying step a refining step.

11. The method for producing quick-cooking or instant parboiled cereals according to claim 10 wherein the refining step is performed after the cooling step.

12. The method for producing quick-cooking or instant parboiled cereals according to any one of the preceding claims, comprising after the drying and tempering step a re-humidification and heating step wherein the grains are heated, preferably with the injection of steam, until reaching a moisture content (MC) of 20 - 22 % and a temperature of 60°C - 65°C.

13. The method for producing quick-cooking or instant parboiled cereals according to claim 12, wherein the re-humidification and heating step is performed in a rotary apparatus with continuous remixing of the grains.

14. The method for producing quick-cooking or instant parboiled cereals according to any one of the preceding claims, wherein rollers are not heated, even more preferably cooled.

15. The method for producing quick-cooking or instant parboiled cereals according to any one of the preceding claims, comprising after the rolling step a final drying step designed to bring the grains to a equilibrium moisture content (MC) to obtain a quick cooking product.

16. The method for producing instant parboiled cereals according to any one of claims 1 to 14, comprising a step of expansion of the grains and wherein the step for expansion of the grains is preceded and/or followed by a drying step.

## Patentansprüche

1. Verfahren zur Herstellung von Schnellkoch- oder Instant-Parboiled-Getreide, umfassend:
- einen Schritt zum Einweichen oder Hydratisieren von Körnern, wobei die Körner in Wasser bei einer Temperatur unter der Geliertemperatur (Tg) des verarbeiteten Getreides eingetaucht werden, wobei der Schritt zum Einweichen so geregelt ist, dass der durch die Körner erreichte Feuchtigkeitsgehalt zwischen 27 % und 32 % beträgt;
- einen Schritt zum Garen der hydratisierten Körner, der durchgeführt wird, indem die Körner in einer feuchten Umgebung einer Temperatur ausgesetzt werden, die über der Geliertemperatur (Tg) des verarbeiteten Getreides liegt, wobei der Schritt zum Garen in einem Autoklav unter Nutzung gesättigten Dampfs durchgeführt wird, der bei einem Druck zwischen 10 kPa (0,1 bar) und 150 kPa (1,5 bar), vorzugsweise 10 kPa (0,1 bar) und 80 kPa (0,8 bar), eingeleitet wird;
- einen Schritt zum Mikrowellenerhitzen, der unmittelbar nach dem Schritt zum Garen durchgeführt wird;
- einen Schritt zum kontrollierten Trocknen und Härten, sodass die Körner auf einen mittleren Feuchtigkeitswert gleich 16 % bis 18 % gebracht werden, mit einem differenzierten Feuchtigkeitsgehalt des äußeren und oberflächlichen Teils des Korns und des Kerns des Korns, wobei der Feuchtigkeitsgehalt des äußeren und oberflächlichen Teils des Korns zwischen 8 % und 10 % beträgt, wobei der Schritt zum Trocknen und Härten eine Abfolge von mindestens zwei, vorzugsweise vier Zwischenschritten umfasst, von denen ein jeder bei einer vorgegebenen Trocknungstemperatur durchgeführt wird, die größer ist als die Trocknungstemperatur des unmittelbar darauffolgenden Zwischenschritts, und wobei der Schritt zum Trocknen und Härten in einem Rotationstrockner mit Unterteilungen stattfindet, vorzugsweise mit Luftzuführung, mit separaten Sektionen, die jeweils die Zwischenschritte definieren;
- einen Schritt zum Walzen der Körner, wobei die Körner einheitlich gepresst werden, wobei der Schritt zum Walzen so geregelt ist, dass ein quer verlaufendes Aufreißen des äußeren und oberflächlichen Teils des Korns erzielt wird, und wobei die Körner während des Schritts zum Walzen einheitlich gepresst werden, indem glatte Walzen verwendet werden, die sich bei gleichen Drehzahlen und in entgegengesetzte Richtungen drehen.

2. Verfahren zur Herstellung von Schnellkoch- oder Instant-Parboiled-Getreide nach Anspruch 1, wobei
ein erster Schritt zum Trocknen bei einer ersten Trocknungstemperatur von 95 °C stattfindet und ein letzter Schritt zum Trocknen bei einer vierten Trocknungstemperatur von 65 °C stattfindet, und wobei vorzugsweise ein zweiter Trocknungsschritt bei einer zweiten Trocknungstemperatur von 85 °C stattfindet und ein dritter Trocknungsschritt bei einer dritten Trocknungstemperatur von 75 °C stattfindet.

3. Verfahren zur Herstellung von Schnellkoch- oder Instant-Parboiled-Getreide nach Anspruch 1, wobei die letzten Reihen der Unterteilungen des Rotationstrockners von den übrigen getrennt sind, sodass ihnen keine Luft zugeführt wird, sodass eine vorgegebene Härtung gefördert wird.

4. Verfahren zur Herstellung von Schnellkoch- oder Instant-Parboiled-Getreide nach einem der vorhergehenden Ansprüche, wobei die Körner beim Schritt zum Hydratisieren bei einer Temperatur in Wasser getaucht werden, die um 2 bis 3 °C unter der Geliertemperatur des verarbeiteten Getreides liegt.

5. Verfahren zur Herstellung von Schnellkoch- oder Instant-Parboiled-Getreide nach einem der vorhergehenden Ansprüche, wobei der Schritt zum Hydratisieren in vertikalen Silos vorzugsweise mit Wasserumwälzung durchgeführt wird.

6. Verfahren zur Herstellung von Schnellkoch- oder Instant-Parboiled-Getreide nach einem der Ansprüche 1 bis 4, wobei der Schritt zum Hydratisieren in einem Schraubenförderer mit erhitztem Mantel durchgeführt wird und die Körner einer kontinuierlichen Bewegung durch eine rotierende Schraube mit Einspritzung von Wasser und Dampf ausgesetzt werden.

7. Verfahren zur Herstellung von Schnellkoch- oder Instant-Parboiled-Getreide nach einem der vorhergehenden Ansprüche, wobei der Schritt zum Einweichen mit einem vorzugsweise 60 Minuten dauernden Ruheschritt abgeschlossen wird, nachdem das überschüssige Wasser abgelassen wurde.

8. Verfahren zur Herstellung von Schnellkoch- oder Instant-Parboiled-Getreide nach einem der vorhergehenden Ansprüche, umfassend nach dem Schritt zum Trocknen und Härten einen Schritt zum Abkühlen, wobei die Körner abgekühlt werden, bis sie eine Umgebungstemperatur (Ta) beispielsweise zwischen 25 °C und 30 °C erreichen.

9. Verfahren zur Herstellung von Schnellkoch- oder Instant-Parboiled-Getreide nach Anspruch 8, wobei der Schritt zum Kühlen in einem mit eiskaltem Wasser gekühlten Luftkühler für einen maximalen Zeitraum von 2 oder 3 Minuten durchgeführt wird, wobei der Abkühlungsgrad des äußeren und oberflächlichen Teils des Korns relativ zum Kern differenziert ist.

10. Verfahren zur Herstellung von Schnellkoch- oder Instant-Parboiled-Getreide nach einem der vorhergehenden Ansprüche, umfassend nach dem Schritt zum Trocknen einen Schritt zum Veredeln.

11. Verfahren zur Herstellung von Schnellkoch- oder Instant-Parboiled-Getreide nach Anspruch 10, wobei der Schritt zum Veredeln nach dem Schritt zum Abkühlen durchgeführt wird.

12. Verfahren zur Herstellung von Schnellkoch- oder Instant-Parboiled-Getreide nach einem der vorhergehenden Ansprüche, umfassend nach dem Schritt zum Trocknen und Härten einen Schritt zum Wiederbefeuchten und Erhitzen, wobei die Körner vorzugsweise mit der Einspritzung von Dampf erhitzt werden, bis sie einen Feuchtigkeitsgehalt (MC) von 20 bis 22 % und eine Temperatur von 60 °C bis 65 °C erreichen.

13. Verfahren zur Herstellung von Schnellkoch- oder Instant-Parboiled-Getreide nach Anspruch 12, wobei der Schritt zum Wiederbefeuchten und Erhitzen in einem Rotationsgerät mit dem kontinuierlichen Durchmischen der Körner durchgeführt wird.

14. Verfahren zur Herstellung von Schnellkoch- oder Instant-Parboiled-Getreide nach einem der vorhergehenden Ansprüche, wobei die Walzen nicht erhitzt, sondern noch bevorzugter gekühlt sind.

15. Verfahren zur Herstellung von Schnellkoch- oder Instant-Parboiled-Getreide nach einem der vorhergehenden Ansprüche, umfassend nach dem Schritt zum Walzen einen abschließenden Trocknungsschritt, der ausgestaltet ist, um die Körner auf einen ausgeglichenen Feuchtigkeitsgehalt (MC) zu bringen, um ein Schnellkochprodukt zu erhalten.

16. Verfahren zur Herstellung von Instand-Parboiled-Getreide nach einem der Ansprüche 1 bis 14, umfassend einen Schritt zum Expandieren der Körner, wobei der Schritt zum Expandieren der Körner vor und/oder nach einem Schritt zum Trocknen erfolgt.

## Revendications

1. Procédé de production de céréales étuvées instantanées ou à cuisson rapide, comprenant :
- une étape de tremper ou d'hydrater des grains dans laquelle les grains sont immergés dans l'eau à une température inférieure à la température de gélatinisation (Tg) de la céréale traitée, l'étape de tremper étant régulée de telle sorte que le taux d'humidité atteint par les grains soit compris entre 27 % et 32 %,
- une étape de cuire des grains hydratés réalisée en soumettant les grains à une température supérieure à la température de gélatinisation (Tg) de la céréale traitée, dans un environnement humide, dans lequel l'étape de cuire est réalisée dans un autoclave utilisant de la vapeur saturée introduite à une pression comprise entre 10 kPa (0,1 bar) et 150 kPa (1,5 bar), de préférence entre 10 kPa (0,1 bar) et 80 kPa (0,8 bar),
- une étape de chauffer par micro-ondes réalisée immédiatement après l'étape de cuire,
- une étape de sécher et de tremper sous contrôle de manière à amener les grains à une valeur moyenne d'humidité égale à 16 % - 18 % avec une teneur en humidité différenciée entre la partie extérieure et superficielle du grain et le coeur du grain, la teneur en humidité de la partie externe et de la surface du grain étant comprise entre 8 % et 10 %, dans laquelle l'étape de sécher et de tremper comprend une séquence d'au moins deux, de préférence quatre étapes intermédiaires fonctionnant chacune à une température de séchage prédéterminée supérieure à la température de séchage de l'étape intermédiaire qui suit immédiatement et dans laquelle l'étape de sécher et de tremper a lieu dans un séchoir rotatif avec des compartiments, de préférence alimentés en air, avec des sections séparées définissant, respectivement, les étapes intermédiaires,
- une étape de laminer des grains dans laquelle les grains sont uniformément comprimés, l'étape de laminer étant réglée de manière à obtenir une fissuration transversale de la partie extérieure et superficielle du grain et dans laquelle, au cours de l'étape de laminer, les grains sont comprimés uniformément à l'aide de rouleaux lisses tournant à des vitesses égales et dans des directions opposées.

2. Procédé de production de céréales étuvées instantanées ou à cuisson rapide selon la revendication 1, dans lequel :
une première étape de sécher se déroule à une première température de séchage de 95°C et une dernière étape de sécher se déroule à une quatrième température de séchage de 65°C, et où, de préférence, une deuxième étape de sécher se déroule à une deuxième température de séchage de 85°C et une troisième étape de sécher se déroule à une troisième température de séchage de 75°C.

3. Procédé de production de céréales étuvées instantanées ou à cuisson rapide selon la revendication 1, dans lequel les dernières rangées de compartiments du séchoir rotatif sont isolées des autres de manière à ne pas recevoir d'air afin de favoriser un trempage prédéterminé.

4. Procédé de production de céréales étuvées instantanées ou à cuisson rapide selon l'une quelconque des revendications précédentes, dans lequel, lors de l'étape d'hydrater, les grains sont immergés dans de l'eau à une température inférieure de 2 à 3°C à la température de gélatinisation de la céréale traitée.

5. Procédé de production de céréales étuvées instantanées ou à cuisson rapide selon l'une quelconque des revendications précédentes, dans lequel l'étape d'hydrater est réalisée dans des silos verticaux, de préférence avec recirculation d'eau.

6. Procédé de production de céréales étuvées instantanées ou à cuisson rapide selon l'une quelconque des revendications 1 à 4, dans lequel l'étape d'hydrater est réalisée dans un convoyeur à vis avec enveloppe chauffée soumettant les grains à un mouvement continu au moyen d'une vis rotative, avec injection d'eau et de vapeur.

7. Procédé de production de céréales étuvées instantanées ou à cuisson rapide selon l'une quelconque des revendications précédentes, dans lequel l'étape de tremper se termine par une étape de repos, après égouttage de l'eau excédentaire, de préférence pendant 60 minutes.

8. Procédé de production de céréales étuvées instantanées ou à cuisson rapide selon l'une quelconque des revendications précédentes, comprenant, après l'étape de sécher et de tremper, une étape de refroidir dans laquelle les grains sont refroidis jusqu'à ce qu'ils atteignent une température ambiante (Ta), par exemple entre 25°C et 30°C.

9. Procédé de production de céréales étuvées instantanées ou à cuisson rapide selon la revendication 8, dans laquelle l'étape de refroidir est effectuée dans un refroidisseur d'air refroidi à l'eau glacée pendant une durée maximale de 2 ou 3 minutes, en différenciant le degré de refroidissement de la partie extérieure et superficielle du grain par rapport au coeur.

10. Procédé de production de céréales étuvées instantanées ou à cuisson rapide selon l'une quelconque des revendications précédentes, comprenant après l'étape de sécher une étape de raffiner.

11. Procédé de production de céréales étuvées instantanées ou à cuisson rapide selon la revendication 10, dans lequel l'étape de raffiner est effectuée après l'étape de refroidir.

12. Procédé de production de céréales étuvées instantanées ou à cuisson rapide selon l'une quelconque des revendications précédentes, comprenant, après l'étape de sécher et de tremper, une étape de réhumidifier et de chauffer dans laquelle les grains sont chauffés, de préférence par injection de vapeur, jusqu'à ce qu'ils atteignent un taux d'humidité (MC) de 20 à 22 % et une température de 60 à 65°C.

13. Procédé de production de céréales étuvées instantanées ou à cuisson rapide selon la revendication 12, dans lequel l'étape de réhumidifier et de chauffer est réalisée dans un appareil rotatif avec remélange continu des grains.

14. Procédé de production de céréales étuvées instantanées ou à cuisson rapide selon l'une quelconque des revendications précédentes, dans lequel les rouleaux ne sont pas chauffés, mais encore plus préférablement refroidis.

15. Procédé de production de céréales étuvées instantanées ou à cuisson rapide selon l'une quelconque des revendications précédentes, comprenant après l'étape de laminer une étape finale de sécher destinée à amener les grains à un taux d'humidité (MC) d'équilibre pour l'obtention d'un produit à cuisson rapide.

16. Procédé de production de céréales instantanées étuvées selon l'une des revendications 1 à 14, comprenant une étape d'expansion des grains et dans lequel l'étape d'expansion des grains est précédée et/ou suivie d'une étape de sécher.
